# EUROPÄISCHE PATENTSCHRIFT

(11) **EP 3 406 581 B1**
(45) Veröffentlichungstag und Bekanntmachung des Hinweises auf die Patenterteilung: **23.06.2021**
(21) Anmeldenummer: 18164984.9
(22) Anmeldetag: 29.03.2018
(51) Int. Cl.: C04B 28/00, C04B 28/04, C04B 28/10, C04B 28/12, C04B 28/30

(54) **VERFAHREN ZUR HERSTELLUNG EINES FORMTEILS AUS EINER TROCKENMISCHUNG MIT GRAPHITPARTIKELN UND SO HERGESTELLTES FORMTEIL**
DRY MIXTURE WITH GRAPHITE PARTICLES, METHOD FOR PRODUCING A SHAPED ARTICLE FROM THIS DRY MIXTURE AND SHAPED ARTICLE MADE BY THIS METHOD
MÉLANGE SEC À PARTICULES DE GRAPHITE, PROCÉDÉ DE FABRICATION D'UN ÉLÉMENT DE FORMAGE À PARTIR DUDIT MÉLANGE SEC ET ÉLÉMENT DE FORMAGE FABRIQUÉ SELON LEDIT PROCÉDÉ

(30) Priorität: 26.05.2017 DE 102017208905
(43) Veröffentlichungstag der Anmeldung: 28.11.2018
(73) Patentinhaber: kipan GmbH, 95119 Nalia (DE)
(72) Erfinder: Kipfelsberger, Angela, 95119 Naila (DE)
(74) Vertreter: Rau, Schneck & Hübner Patentanwälte Rechtsanwälte PartGmbB

(56) Entgegenhaltungen:
- EP-A1- 2 426 096
- WO-A1-96/00197
- CN-A- 1 282 713
- CN-A- 101 391 878
- DE-A1- 3 821 684
- DE-A1-102010 010 957
- FR-A5- 2 186 878
- US-A- 3 207 705
- US-A- 3 626 149
- US-A1- 2011 024 028
- Energieberater: "Mörtel", , 1 May 2017 (2017-05-01), XP055614824, Retrieved from the Internet: URL:http://www.schulungsstelle-traunstein. de/Energieberatung/background/530402966508 36f01/53040296660c4517a/index.html [retrieved on 2019-08-22]
- Vdz: "4 Hydratation des Zements und Gefüge des Zementsteins 4.1 Hydratation des Zements", VDZ Online KompendiumZementBeton, 1 May 2017 (2017-05-01), XP055615220, Retrieved from the Internet: URL:https://www.vdz-online.de/fileadmin/gr uppen/vdz/3LiteraturRecherche/KompendiumZe mentBeton/1-4_Hydratation.pdf [retrieved on 2019-08-26]
- Diethelm Bosold ET AL: "Leichtbeton", Zement-Merkblatt Betontechnik B13, 1 June 2014 (2014-06-01), XP055621770, Retrieved from the Internet: URL:https://www.beton.org/fileadmin/beton- org/media/Dokumente/PDF/Service/Zementmerk blätter/B13.pdf [retrieved on 2019-09-12]

## Beschreibung

Die Erfindung betrifft ein aus einer Trockenmischung mit Graphitpartikeln hergestelltes Leichtbauformteil, ein Sandwichbauteil sowie ein Verfahren zur Herstellung eines Leichtbauformteils aus einer derartigen Trockenmischung. Es ist eine binderfreie Graphitleichtbauplatte bekannt, die ausschließlich aus expandierten Graphitflocken und insbesondere ohne jeglichen Zusatz von Bindemitteln, hergestellt ist. Diese Graphitleichtbauplatte ist mechanisch instabil und als Halbzeug z.B. für Bauanwendungen nicht ohne weiteres einsetzbar. Es ist bekannt, Graphit als Zuschlagstoff für ein Bauelement zu verwenden, um beispielweise dessen Wärmeleitfähigkeit zu erhöhen. Bei dem aus dem Stand der Technik bekannten Bauelement wird eine Gesteinskörnung aus beispielsweise Basalt oder Quarzsand verwendet, um ein Betonsystem, ein Estrichsystem und/oder ein Mörtelsystem bereitzustellen, das verarbeitbar und/oder handhabbar ist. Graphit ist als Zuschlagstoff für Polymersysteme bekannt, beispielsweise in Form von Kunststoffen mit Graphitpulver zur Verbesserung der Wärmeleitfähigkeit und/oder zur Verbesserung der elektromagnetischen Abschirmwirkung.

Die Verwendung von Graphitpartikeln für Baustoffmischungen ist bekannt aus WO 2016/087 673 A1, aus DE 103 06 473 A1, aus DE 35 078 77 C2, aus DE 10 2011 007 843 A1, der US 3,626,149, der FR 2 186 878 A, der EP 2 426 096 A1, der DE 38 21 684 A1, der DE 695 07 027 T2, der CN 101391878 A, der US 3,207,705, der CN 1282713 und aus DE 11 2004 002 724 T5. Die US 2011/0024028 A1 offenbart ein Verfahren zur schichtweisen additiven Fertigung mittels Baumaterialien. Die DE 10 2010 010 957 A1 offenbart ein Baumaterial mit wärmedämmender Eigenschaft.

Die EP 1 065 451 A2 offenbart ein graphithaltiges Verfüllmaterial als Erdreichwärmeüberträger.

Es ist eine Aufgabe der vorliegenden Erfindung, die vorteilhaften Materialeigenschaften von Graphit für Anwendungen, insbesondere von Baustoffen, Baumaterialien und insbesondere daraus hergestellten Leichtbauelementen und Sandwichbauteilen für einen verbesserten Wärmetransport, einer besseren Wärmespeicherung wie auch einer verbesserten elektrischen Leitfähigkeit und/oder einer verbesserten elektromagnetischen Schirmwirkung, besser zu nutzen.

Diese Aufgabe ist erfindungsgemäß gelöst durch ein Leichtbauformteil mit den in Anspruch 1 angegebenen Merkmalen, durch ein Sandwichbauteil mit den in Anspruch 11 und 12 angegebenen Merkmalen und durch ein Verfahren zur Herstellung eines Leichtbauformteils mit den im Anspruch 13 angegebenen Merkmalen.

Erfindungsgemäß wurde erkannt, dass das Graphit nicht als Zuschlagstoff, sondern als Hauptbestandteil einer Trockenmischung vorteilhaft verwendet werden kann. Graphit, also Kohlenstoff, weist eine sehr hohe Wärmeleitfähigkeit und elektrische Leitfähigkeit auf. Die weiteren vorteilhaften physikalischen und chemischen Eigenschaften, insbesondere die hohe Temperaturbeständigkeit, die Fähigkeit Feuchtigkeit aufzunehmen und abzugeben, sowie die geringe Partikeldichte und der ausgeprägte inerte Charakter dieses Werkstoffs können für eine Trockenmischung und die daraus hergestellten Formteile genutzt werden.

Ein Leichtbauformteil kann insbesondere ein zementgebundenes Graphitbauelement mit hoher Wärmeleitfähigkeit und/oder hoher Wärmespeicherung sein und insbesondere vorteilhafte Eigenschaften bezüglich der Abschirmung elektromagnetischer Strahlen aufweisen.

Das Leichtbauformteil kann auch zur Leitung und/oder Speicherung von elektrischem Strom dienen.

Das Formteil ist nicht brennbar und weist im Wesentlichen keine thermische Ausdehnung auf.

Ein Leichtbauformteil weist eine besonders hohe Wärmeleitfähigkeit von mindestens 0,5 W/mK auf. Die Wärmeleitfähigkeit des Leichtbauformteils beträgt insbesondere mindestens 0,7 W/mK, insbesondere mindestens 1,0 W/mK, insbesondere mindestens 1,5 W/mK, insbesondere mindestens 2,0 W/mK, insbesondere mindestens 2,3 W/mK, insbesondere mindestens 2,5 W/mK, insbesondere mindestens 3,0 W/mK, insbesondere mindestens 3,5 W/mK, insbesondere mindestens 4,0 W/mK und insbesondere mindestens 4,5 W/mK.

Wesentlich ist, dass das Leichtbauformteil aus einer Trockenmischung in einer einfachen Zusammensetzung ausschließlich Graphitpartikel und ein Bindemittel umfasst, also weitere Zuschlagstoffe entbehrlich sind.

Das erfindungsgemäß hergestellte Leichtbauformteil zeichnet sich insbesondere durch eine hohe UV-Beständigkeit aus. Die UV-Beständigkeit des Formteils ist vergleichbar mit der eines Betonelements, das der Umwelt, also den Sonnenstrahlen, ausgesetzt ist.

Das Leichtbauformteil weist eine hohe mechanische Festigkeit auf. Die mechanische Festigkeit, insbesondere die Druckfestigkeit des Formteils wird im Wesentlichen von den eingesetzten Graphitpartikeln und den Bindemitteln bestimmt. Die Druckfestigkeit liegt insbesondere zwischen 0,02 N/mm² bis 50 N/mm².

Ein Formteil, dessen Dichte im Bereich zwischen 0,1 g/cm³ und 3,5 g/cm³, insbesondere im Bereich zwischen 0,1 g/cm³ und 2,9 g/cm³, insbesondere zwischen 0,1 g/cm³ und 2,5 g/cm³ insbesondere zwischen 0,1 g/cm³ und 2,0 g/cm³, insbesondere zwischen 0,5 g/cm³ und 2,0 g/cm³ liegt, ist als Leichtbauformteil ausgeführt. Vorteilhaft ist, dass die Dichte des Formteils gezielt einstellbar ist. Bei Verwendung von Spezialzementen mit hohen Reindichten und schweren Zuschlagstoffen wie Schwerspat, Magnetit oder Hämatit, können auch bei einer selbstverdichtenden Abbindung der Trockenmischung mit Wasser mittels Schwerkraft, d.h. ohne Einwirkung einer zusätzlichen Verdichtungsenergie, sehr hohe Dichten des Formteils erreicht werden. Mit dem zusätzlichen Einsatz einer Verdichtungsenergie durch beispielsweise Rütteln, Stampfen, Pressen, lassen sich Dichten von größer 3,5 g/cm³ erreichen. In Verbindung mit der hohen Formteildichte kann auch die Druckfestigkeit des Formelteils auf 100 N/mm² und darüber hinaus steigen.

Der Naturgraphit beeinflusst vor allem die Wärmeleitfähigkeit und die elektrische Leitfähigkeit bzw. die Abschirmwirkung gegenüber elektromagnetischer Strahlung der Trockenmischung bzw. des Leichtbauformteils.

Insbesondere bei der Verwendung von gemahlenem Naturgraphit, expandierten Graphitflocken und/oder Graphitmahlgut aus Graphitfolien beträgt die Partikeldichte höchstens zwischen 2,0 g/cm³ und 2,3 g/cm³.

Die geringe Schüttdichte des Naturgraphits von insbesondere weniger als 700 g/l bewirkt eine reduzierte Dichte der Trockenmischung. Bei Naturgraphit mit einer mittleren Korngröße von 200 µm und 97 % Kohlenstoffgehalt beträgt die Schüttdichte zwischen 85 g/l und 125 g/l, insbesondere zwischen 100 g/l und 110 g/l. Bei Naturgraphit mit Korngrößen im Bereich von 0 mm bis 5 mm beträgt die Schüttdichte zwischen 150 g/l und 230 g/l, insbesondere zwischen 180 g/l und 200 g/l.

Für gemahlenen Naturgraphit liegen die Schüttdichten bevorzugt im Bereich zwischen 10 g/l bis 700 g/l und für expandierte Graphitflocken im Bereich von 2 g/l bis 20 g/l. Naturgraphit ist vorteilhaft mechanisch zu bearbeiten, insbesondere durch Sägen und/oder Bohren, wobei sich die gute mechanische Verarbeitbarkeit auch auf das aus der Trockenmischung hergestellte Leichtbauformteil übertragen hat.

Der synthetische Graphit ermöglicht die Verbesserung der mechanischen Eigenschaften, insbesondere aufgrund einer hohen Festigkeit.

Vorteilhaft ist es, wenn der synthetische Graphit eine Mohshärte von mehr als 6, insbesondere von mehr als 7 und insbesondere zwischen 8 und 9 aufweist. Bei der Verwendung von synthetischen Graphiten kann die Dichte auch mehr als 2,3 g/cm³ betragen. Die Schüttdichte des synthetischen Graphits ist insbesondere größer als 700 g/l.

Für synthetischen Graphit mit Partikeln, die eine Korngröße von größer als 4 mm aufweisen, beträgt die Schüttdichte zwischen 920 g/l und 940 g/l, insbesondere 925 g/l, in einem Korngrößenbereich zwischen 1,25 mm und 4,0 mm beträgt die Schüttdichte zwischen 890 g/l und 920 g/l, insbesondere 905 g/l, in einem Korngrößenbereich zwischen 0,8 mm und 1,25 mm beträgt die Schüttdichte zwischen 840 g/l und 870 g/l, insbesondere 856 g/l, in einem Korngrößenbereich zwischen 0,4 mm und 0,8 mm zwischen 830 g/l und 840 g/l, insbesondere 835 g/l, und in einem Korngrößenbereich kleiner 0,4 mm zwischen 700 g/l und 720 g/l, insbesondere 709 g/l.

Aufgrund der erhöhten mechanischen Festigkeit, ist es möglich, in ein Formteil aus synthetischem Graphit, Dübel in ein Bohrloch zu setzen und höhere Lasten in das Formteil abzutragen.

Das anorganische Bindemittel erfordert Anmachwasser, um die Trockenmischung abzubinden. Erfindungsgemäß wurde erkannt, dass die Graphitpartikel für den Bindeprozess nicht erforderlich sind. In Abhängigkeit des verwendeten Bindemittels wie beispielsweise Kalk, Magnesia, Tonmehl und/oder Zement ist ein Abbinden des Bindemittels unabhängig von den Graphitpartikeln möglich. Durch das Bindemittel werden die Graphitpartikel miteinander fixiert und dadurch miteinander verbunden. Der Masseanteil der Graphitpartikel in der Trockenmischung ist im Wesentlichen frei wählbar und beträgt mehr als 0,05. Die Graphitpartikel können einen Hauptbestandteil der Trockenmischung bilden. Insbesondere beträgt der Masseanteil der Graphitpartikel mindestens 0,10, insbesondere mindestens 0,20, insbesondere mindestens 0,25, insbesondere mindestens 0,30, insbesondere mindestens 0,50 und insbesondere mindestens 0,80.

Insbesondere beträgt der Masseanteil an Bindemittel in der Trockenmischung mehr als 0,05, insbesondere mindestens 0,25, insbesondere mindestens 0,40, insbesondere mindestens 0,50, insbesondere mindestens 0,55, insbesondere mindestens 0,60, insbesondere mindestens 0,65, insbesondere mindestens 0,70, insbesondere mindestens 0,80, insbesondere mindestens 0,90 und insbesondere höchstens 0,95.

Aus der Trockenmischung kann ein Formteil hergestellt werden, das ausreichende mechanische Festigkeit aufweist.

Das Bindemittel, das vorzugsweise mit Wasser gemischt eine Bindung der Graphitpartikel ermöglicht, ist einfach zu verarbeiten und eignet sich insbesondere für den direkten Einsatz auf der Baustelle zur handwerklichen Herstellung eines Bauelements und zur diskontinuierlichen oder kontinuierlichen Herstellung von Formteilen in einer Fertigungseinrichtung.

Ein anorganisches Bindemittel, insbesondere Zement, der beispielsweise auch mit Zusatzmittel und Zusatzstoffe sowie gegebenenfalls mit Fasern ausgerüstet sein kann, insbesondere Portlandzement, Portlandkompositezement, Hochofenzement, Puzzolanzement, Kompositezement und/oder Sonderzemente wie beispielsweise Weißzemente oder hydrophobierte Zemente, ist im Bereich von Bauanwendungen den Fachleuten vertraut. Die Handhabung ist unkompliziert und fehlerunanfällig. Das anorganische Bindemittel, insbesondere Zement dient auch als Wärmespeicher. Ein aus der Trockenmischung mit Zement hergestelltes Formteil kann eine vorteilhafte Wärmespeicherkapazität aufweisen.

Unter Zusatzmittel werden beispielsweise Betonverflüssiger, Fließmittel, Schaumbildner und Verzögerer verstanden. Zusatzstoffe sind beispielsweise Quarzmehl, Pigmente, Trass, Silikastaub und Flugasche.

Weitere anorganische Bindemittel können sein Kalk, beispielsweise in Form von Baukalk, Luftkalk oder hydraulische Kalke, oder Magnesiabinder, einem Bindemittel aus Magnesiumoxid und löslichen Magnesiumsalzen wie Magnesiumchlorid oder kaustische Magnesia aus beispielsweise gebranntem Magnesit. Ebenso ist es möglich Aschen wie beispielsweise Flug- und Vulkanaschen als Bindemittel, vorzugsweise in Kombination mit Zement zu verwenden, oder Tonmehl.

Die Schüttdichte von Standardzement als hydraulisches Bindemittel beträgt etwa 900 g/l bis 1200 g/l, insbesondere zwischen 1000 g/l und 1200 g/l, für Kalk etwa 600 g/l - 1400 g/l, insbesondere zwischen 800 g/l und 1000 g/l, für Magnesit etwa 1000 g/l bis 1200 g/l und für Tonmehl etwa 1200 g/l bis 1400 g/l.

Es ist auch möglich, mehrere anorganische Bindemittel miteinander zu kombinieren.

Als Trockenmischung wird ein System verstanden, das Graphitpartikel und ein Bindemittel umfasst, die zur Herstellung eines Formteils gemischt werden.

Das Bindemittel gewährleistet die zuverlässige und mechanisch robuste Bindung der Graphitpartikel. Die Trockenmischung ist geeignet, ein mechanisch stabiles Formteil herzustellen. Die Trockenmischung kann in einem Auslieferungszustand auch unvermischt vorliegen, indem die Graphitpartikel von dem Bindemittel separiert sind und die Mischung der Graphitpartikel mit dem Bindemittel erst vor Ort, insbesondere auf einer Baustelle und/oder einem Formteil-Fertigungswerk, erfolgt.

Die Trockenmischung kann in Abhängigkeit des verwendeten Bindemittels als ökologisch vorteilhaft angesehen werden und kann umweltverträglich, gesundheitlich unbedenklich und nicht brennbar sein.

Die Trockenmischung weist insbesondere eine hohe Resistenz gegenüber chemischen Reagenzien, insbesondere Säuren und/oder Laugen, und Umwelteinflüssen auf.

Die Trockenmischung kann insbesondere eine zementgebundene Putz- und/oder Spachtelmasse mit Graphitmahlgut sein, die unmittelbar auf Strukturen, wie beispielsweise eine Mauer, aufgetragen werden kann. Eine Form zur Herstellung eines Leichtbauformteils ist dann entbehrlich.

Grundsätzlich gilt, dass die Eigenschaften der Trockenmischung und somit eines aus dieser Trockenmischung hergestellten Leichtbauformteils durch gezielte Zugabe von Funktionsadditiven, insbesondere mindestens einem Thermo-Additiv, mindestens einem Elektro-Additiv oder mindestens einem Struktur-Additiv oder einer beliebigen Mischung hieraus konkret und anwendungsorientiert einstellbar sind. Für die zu erreichende Werkstoffparameter ergeben sich weite Bereichsgrenzen. Die Trockenmischung ist vielfältig, flexibel einsetzbar.

Ein Leichtbauformteil weist insbesondere isotrope Werkstoffeigenschaften auf. In Abhängigkeit der Zugabe von Funktionsadditiven ist es möglich, anisotrope, also richtungsabhängige Werkstoffeigenschaften einzustellen. Es ist auch denkbar, einzelne Funktions-Additive homogen wie auch inhomogen in der Trockenmischung und insbesondere in der Form zur Herstellung des Formteils anzuordnen, um lokal unterschiedliche Werkstoffeigenschaften herzustellen.

In Abhängigkeit des Mischungsverhältnisses von Graphitpartikeln zu Bindemittel, insbesondere Zement, kann ein Leichtbauformteil gemäß Anspruch 1 mit einstellbarer Dichte, einem verbesserten Wasseraufnahme- und -abgabevermögen, einer hohen Wärmeleitfähigkeit und Wärmespeicherfähigkeit, einer erhöhten elektrischen Leitfähigkeit, einem verbesserten Abschirmschutz vor elektromagnetischen Strahlen, einer Reduktion magnetischer Feldstärken, einer hohen chemischen Beständigkeit, einem verbesserten Brandschutz und einem verbesserten Schallschutz durch eine einstellbare Porosität hergestellt werden.

Graphitpartikel gemäß Anspruch 2 ermöglichen eine vorteilhafte Einstellung der Materialeigenschaften der daraus erstellten Leichtbauformteile in Abhängigkeit der Geometrie der Graphitpartikel. Es ist denkbar kornförmige Partikel und/oder faserförmige Partikel zu mischen. Zusätzlich oder alternativ kann Graphit in Pulverform, beispielsweise als Graphitpuder, verwendet werden. Die Teilchengröße der Graphitpulverpartikel beträgt höchstens 1,0 µm. Die Graphitpulverpartikel werden als Nanopartikel bezeichnet. Insbesondere wurde erkannt, dass grundsätzlich jede Partikelgeometrie zur Verwendung in der Trockenmischung geeignet ist. Dadurch erschließt sich ein besonders breites Einsatzgebiet von Graphitpartikeln.

Graphitpartikel mit einer Partikelgröße gemäß Anspruch 3 ermöglichen einen breiten Anwendungsbereich. Die Partikelgröße kann zwischen 0,1 µm bis 100 mm, insbesondere zwischen 1,0 µm und 40 mm, insbesondere zwischen 5 µm und 25 mm, insbesondere 10 µm bis 10 mm, und insbesondere zwischen 200 µm und 5 mm liegen. Die Partikelgröße, die auch als Korngröße bezeichnet wird, ist bezüglich ihrer Mindestgröße nicht limitiert. Es können sogenannte Nanopartikel verwendet werden, die definitionsgemäß eine Partikelgröße von kleiner 100 µm aufweisen.

Die Verwendung von Graphitpartikeln gemäß Anspruch 4 ermöglicht eine besonders breite Anwendung. Insbesondere ist es unerheblich, ob die Graphitpartikel aus natürlichem oder synthetischem Graphit hergestellt sind. Es wurde erkannt, dass beispielsweise kornförmiger Graphit in Form von Naturgraphit als Pulver aus Graphiterz und/oder graphithaltigem Gestein verwendet werden kann. Zusätzlich oder alternativ kann Graphitsalz, also Graphitpulver mit einer interkalierten Säure, wie beispielsweise Schwefelsäure oder Phosphorsäure verwendet werden. Graphitsalz wird vorzugsweise mit einem Zementslurry vermischt und erhitzt, wodurch das Graphitsalz aufgeschäumt wird. Es ist auch denkbar, expandierten Naturgraphit, also Graphitflocken, zu verwenden. Als Graphitpartikel im Sinne der Erfindung kann auch Mahlgut aus Naturgraphit, also in Pulverform, verwendet werden. Das Mahlgut kann aus synthetischem Graphit und/oder aus Naturgraphit in Form von Graphitfolien und/oder Graphitleichtbauplatten, gewonnen, also rezykliert werden. Dieses Mahlgut weist vorzugsweise eine Pulverpartikelgröße zwischen 1 µm und 10 mm auf. Das Mahlgut weist gegenüber dem expandierten Graphitflocken verbesserte Verarbeitungseigenschaften auf. Der verfahrenstechnische Aufwand bei der Herstellung der Trockenmischung und/oder eines daraus hergestellten Formteils, ist reduziert. Es ist auch denkbar, Mahlgut aus synthetischem Graphit, insbesondere aus Pech und/oder Koks, kupferinfiltriertem Graphit und insbesondere aus Elektrodenschrott, zu verwenden. Die Korngröße dieses Mahlguts liegt typischerweise im Bereich von 1 µm bis 50 mm, insbesondere zwischen 100 µm bis 10 mm und insbesondere 200 µm bis 5 mm. Faserförmige Graphitpartikel können aus Graphitfasern oder Graphitfolien, insbesondere in Form von Folienstreifen und/oder Folienbändern verwendet werden. Diese Folienstreifen und/oder Folienbänder können auch eine größere Länge als 100 mm besitzen.

Die Graphite gemäß Anspruch 5 sind aus Koks, Ruß und/oder Aktivkohle hergestellt.

Ein Thermo-Additiv gemäß Anspruch 6 ermöglicht eine gezielte Verbesserung der thermischen Eigenschaften der Trockenmischung. Thermo-Additive im Sinne der Erfindung sind beispielsweise Industrieruß, technischer Ruß, wärmeleitendes Gesteinspulver wie Basaltpulver, Quarzit Schwerspat, Magnetit, Hämatit oder Schiefermehl, Mahlgut aus synthetischem Graphit, insbesondere Elektrodenschrott, Metallpulver, wie Zinkpulver, metallische Fasern, faserförmige oder flächige Gebilde aus elektrisch leitfähigen Materialien, wie beispielsweise Kupfergewebe, sowie Phasenwechselmaterialien (PCM). Es ist möglich, verschiedene Thermo-Additive in der Trockenmischung zu verwenden.

Elektro-Additive gemäß Anspruch 7 dienen zur Verbesserung der elektrischen Eigenschaften, insbesondere der elektrischen Leitfähigkeit und/oder der Abschirmung gegenüber elektromagnetischer Strahlung. Elektro-Additive können sein Mahlgut aus synthetischem Graphit, wie beispielsweise Elektrodenschrott, Pulver aus Gesteinskörnungen wie Magnesitstein, Metallpulver bzw. Pigmente aus Kupfer, Silber, Zink, metallische Fasern, faserförmige und/oder flächige Gebilde aus elektrisch leitfähigen Materialien, insbesondere metallische Gewebe, wie Kupfergewebe oder Kohlenstoffgewebe, und/oder Gewirke bzw. Gestricke.

Ein Leichtbauformteil kann elektrisch leitfähige Fäden, Drähte und/oder Elektrogewebe eingebettet aufweisen, um eine aktive Temperierung, insbesondere ein Erwärmen und/oder Kühlen des Formteils zu ermöglichen.

Struktur-Additive gemäß Anspruch 8 ermöglichen eine gezielte Veränderung der Struktur eines aus der Trockenmischung hergestellten Formteils. In Abhängigkeit des beigemischten Struktur-Additivs kann beispielsweise die Dichte erniedrigt oder die Schwindung verringert werden. Beispielsweise können festigkeitssteigernde Struktur-Additive oberflächennah in der Form vorgesehen sein, um eine verbesserte mechanische Festigkeit des so hergestellten Formteils zu ermöglichen. Struktur-Additive können anorganische Fasern wie Metallfasern aus Aluminium, Kupfer und/oder Silber, Stahlfasern, keramische Fasern, Glasfasern, Kohlenstofffasern, Carbonfasern und/oder Basaltfasern sein. Alternativ oder zusätzlich können Chemiefasern, insbesondere thermoplastische Fasern, insbesondere Fasern aus Polypropylen (PP), Polyethylen (PE-LD, PE-HD), Polyamid (PA 6, PA 66), Polyester (PET) oder Naturfasern, insbesondere Holz-, Stroh-, Gras-, Schilf- und Hanffasern, verwendet werden. Es ist auch denkbar, aus diesen Fasern homogene oder hybride flächige Gebilde, wie beispielsweise Gewebe, Gestricke und/oder Gewirke zu erzeugen und im Leichtbauformteil zu verwenden.

Als Struktur-Additive sind auch sphärische Zuschlagstoffe wie Gesteinsmehl, insbesondere Blähton, Ziegelmehl, Lehmpulver, Tonpulver, Gips, Basaltmehl, Ziegelsplit, Perlit, Quarzsand, Kurzglasfasern oder Metallsand möglich. Sphärische Zuschlagstoffe können auch Leichtbaustoffe wie Liapor, Bims, Schaumlava oder Blähschiffer sein, um beispielsweise die Dichte der Trockenmischung und damit eines daraus erstellten Leichtbauformteils zu erniedrigen.

Sphärische Zuschlagstoffe können auch Kügelchen aus Polystyrol oder Glas sein, sowie jegliche feine, normale oder grobe wie auch leichte, normale oder schwere Gesteinskörnung und Mischungen hieraus.

Es ist auch möglich als Struktur-Additive jegliche Art von Bewehrungen, Abstandshalter und Unterstützungen in das Leichtbauformteil einzubringen. Ebenso lassen sich Funktionselemente einbetten, wie beispielsweise mechanische Haken, insbesondere Metallhaken, Metallösen, Winkeleisen, Locheisen, Anker, Stifte, Schrauben, Gewindestangen, Schienen und elektrisch leitfähige Anschlüsse wie beispielsweis Drähte.

Es ist auch möglich in dem Leichtbauformteil als Struktur-Additive Profilelemente, insbesondere zum Kantenschutz eines plattenförmigen Formteils zu integrieren. Es ist auch möglich, Verbindungselemente zu integrieren, um das Formteil als eine Lage mit anderen Lagen in einem Sandwichbauteil besser verbinden zu können.

Ein Leichtbauformteil gemäß Anspruch 9 ist besonders unkompliziert in der Herstellung. Funktionsadditive sind entbehrlich. Die Materialeigenschaften der Trockenmischung und der hieraus hergestellten Leichtbauformteile werden insbesondere durch das Mischungsverhältnis von Graphitpartikeln und Bindemittel eingestellt, wobei insbesondere die Auswahl der Graphitpartikel, insbesondere deren Partikelgröße, deren Partikelform und das zugrundeliegende Ursprungsmaterial, aus dem Graphitpartikel hergestellt worden sind, einen Eigenschaftseinfluss ausüben. Insbesondere ist die Verwendung einer Gesteinskörnung entbehrlich, die für die Herstellung von Beton definitionsgemäß erforderlich ist.

Ein Leichtbauformteil gemäß Anspruch 10 weist eine vorteilhafte Abschirmwirkung gegenüber elektromagnetischer Strahlung auf, die insbesondere mindestens 80%, insbesondere mindestens 90 %, insbesondere mindestens 99 %, insbesondere mindestens 99,99 % und insbesondere mindestens 99,9999 %. Ein derartiges Formteil ist insbesondere für Anwendungen unter baubiologischen Gesichtspunkten vorteilhaft einsetzbar. Die Abschirmwirkung gilt insbesondere in einem Wellenlängenbereich von 50 Hz bis 40 GHz.

Ein Sandwichbauteil kann gemäß Anspruch 11 auch dadurch hergestellt werden, dass die Hohlräume von Bauteilen, Bauelementen, Mauersteinen und Bauprofilen z. B. aus Beton, Ziegel, Liapor, Holz und/oder Kunststoff als Form verwendet werden und die angemachte Trockenmischung in diesem Hohlraum aushärtet.

Ein Sandwichbauteil ist gemäß Anspruch 12 ein dreilagiges Verbundelement, insbesondere eine Verbundplatte mit einer mittig angeordneten Platte eines erfindungsgemäßen Formteils.

Ein Sandwichbauteil kann beispielsweise eine Beton-, Lehm-, Gipskarton-, Holz- oder Ziegelplatte ebenso wie ein Bauelement oder ein Mauerstein aus beispielsweise Ziegel, Kalksandstein, Porenbeton, Leichtbeton, Schamotte, Liapor oder ein Element aus mineralischen Dämmstoffen, technischen Geweben und Vliesen, Holz und Klinker aufweisen.

Ein nicht erfindungsgemässes Verfahren, bei dem eine Trockenmischung umfassend Graphitpartikel sowie Zement, Magnesiabinder, kaustisch gebrannter Magnesit, Kalk und/oder Tonmehl als Bindemittel in eine Form eingefüllt werden, wobei der Masseanteil der Graphitpartikel in der Trockenmischung mehr als 0,05 beträgt, bei dem die Trockenmischung mit Wasser, Lauge und/oder wässriger Salzlösung abbindet und bei dem das Formteil aus der Form entnommen wird, ermöglicht die besonders unkomplizierte Verarbeitung der Trockenmischung zur Herstellung eines Formteils. Das Formteil ist insbesondere ein Bauelement. Aufgrund der Tatsache, dass das Bindemittel mit Wasser abbindet, sind der Formgebung bei der Herstellung des Formteils im Wesentlichen keine Grenzen gesetzt. In Abhängigkeit der zur Verfügung gestellten
Form kann ein Formteil mit im Wesentlichen beliebigen Konturen erzeugt werden.

Ebenso ist die Verarbeitung der Trockenmischung gemäß Anspruch 13 mit einem formungebundenen Herstellverfahren wie dem 3D-Druck möglich, das eine Form entbehrlich macht. Mit diesen Verfahren lassen sich sowohl Leichtbauformteile, komplexe Anlagenteile wie Konsolen für Maschinenaufnahmen oder auch Wandelemente und Gebäude herstellen.

Ausführungsbeispiele der Erfindungen werden nachfolgend näher erläutert:
In einer vorteilhaften Ausgestaltung kann anhand der Auswahl des Formteils eine im Wesentlichen freie Formgebung erfolgen. Es ist insbesondere möglich, flächige Formelemente in Form von Platten unterschiedlicher Plattengröße und/oder Plattendicke herzustellen. Es können auch dreidimensional geformte Formelemente, insbesondere Bausteine, Rohre und/oder Profile hergestellt werden. Die Oberflächen des Formteils können glatt oder strukturiert ausgeführt sein.

Ein erfindungsgemäß hergestelltes Leichtbauformteil eignet sich insbesondere für die handwerkliche Verarbeitung beispielsweise auf der Baustelle. Das Formelement kann durch an sich bekannte Sägen und/oder Bohrer bearbeitet werden. Als Verbindungstechniken kommen insbesondere Kleben, Spachteln oder Mörteln und/oder Schrauben in Frage.

Überraschend hat sich auch gezeigt, dass ein aus der Trockenmischung hergestelltes Formteil je nach Graphitanteil mit nahezu allen gängigen Klebstoffen, Spachtelmassen, Putzmassen und/oder Mörtelsystemen mit sich selbst bzw. mit anderen Werkstoffen geklebt bzw. verbunden werden kann.

Als Verbindungsmöglichkeiten kommen auch mechanische Klemmen, Nieten oder Schnappverbindungen in Betracht. Das Formteil kann auch mit einem Nut-/Federsystem ausgebildet sein, um die flächige Verbindung zwischen Formteilen zu verbessern.

Die erfindungsgemäßen Leichtbauformteile eröffnen vielfältige Anwendungen im Baubereich, wie beispielsweise im Kachelofenbau, im Kaminbau, beim Bau von Flächentemperiersystem, als Kühl- und Heizelemente in der Gebäudetechnik, in Anlagen und Geräten wie Gefrierschränken, als Wärmespeicher beispielsweise in Verbindung mit Phasenwechselmaterialien (PCM), als Solarmodul, als Temperiermodul mit eingebetteten Rohrsystemen und/oder elektrischen Heizmatten, als Warmwasserspeicher, als Batteriesystem zur Speicherung von elektrischer Energie.

Ein mit Thermo-Additiven ausgerüstetes Leichtbauformteil kann beispielsweise an elektrischen Schaltschränken oder an Photovoltaik- oder Solarmodulen zur Beplankung und zur Temperierung der Schränke und Module verwendet werden. Ein solches Leichtbauformteil kann auch im Wohnungsbau einsetzt werden, um beispielsweise die Wärme der Sonneneinstrahlung aufzunehmen und weiterzuleiten, bzw. zum Bau von Flächentemperiersystemen, oder zur Steuerung des Wärmehaushaltes von Anlagen und Maschinen.

Durch den Einsatz des Bindemittels, insbesondere in Verbindung mit Schamottepulver oder Phasenwechselmaterialien ist es möglich, ein Formteil bereitzustellen, das eine hohe Wärmeleitfähigkeit aufweist und zudem über eine hohe Wärmespeicherkapazität verfügt. Zusätzlich oder alternativ zu Phasenwechselmaterialen können auch synthetisches Graphitpulver aus Elektrodenschrott und/oder Gesteinskörnungen aus Hartgestein, wie Basalt, Granit und/oder Quarzit, dazu beitragen, dass die Wärmeleitfähigkeit und Wärmespeicherfähigkeit des Formteils erhöht ist. Insbesondere kann die Wärmespeicherkapazität des Formteils in Abhängigkeit des Anteils an Graphit und Bindemittel gezielt eingestellt werden.

Es ist möglich, in das erfindungsgemäße Formteil weitere Funktionskomponenten, wie beispielsweise Rohrmäander und/oder elektrisch leitfähige Gewebe und/oder Phasenwechselmaterialen (PCM) einzubetten. Dadurch kann ein Formteil mit Temperier- und/oder Wärmespeicherfunktion bereitgestellt werden.

Das Leichtbauformteil kann in Abhängigkeit der verwendeten Graphitpartikel porenfrei oder mit einer Porosität von bis zu 100 % ausgeführt sein. Aufschäumadditive und/oder Treibmittel sind entbehrlich. Eine unterschiedliche Dichteverteilung, vergleichbar mit einem Strukturschaumteil als Graphitintegralbauteil, lässt sich durch das Einblasen von Gasen, wie Luft oder Luftbestandteilen, wie beispielsweise Stickstoff in die Form erreichen.

Überraschend wurde gefunden, dass die Porosität der Formteile eine Infiltration mit Flüssigkeit, insbesondere Wasser, verbessert. Ein derartiges Formteil ist dispersionsoffen und eignet sich insbesondere für die Anwendung als Baustoff in Wohninnenräumen. Das Risiko von Schimmelbildung ist reduziert. Mit Wasser infiltrierte Formteile können beispielsweise nahezu beliebig oft eingefroren und wieder aufgetaut werden, ohne dass eine Beschädigung des Formteils festzustellen ist. Die Porosität ermöglicht eine gezielte Einlagerung von Flüssigkeit, insbesondere zur gezielten Festlegung der Funktionseigenschaften des Formteils.

Das Formteil kann beispielsweise auch mit Ölen und/oder Wachsen infiltriert ausgeführt sein.

Die Porengröße des Leichtbauformteils kann in Abhängigkeit vom verwendeten Graphit und/oder dem verwendeten Bindemittel gezielt eingestellt werden. Die Porengrößen liegen in einem Bereich zwischen 0,001 mm und 2,0 mm, insbesondere zwischen 0,01 mm und 1 mm, und insbesondere zwischen 0,1 mm und 0,5 mm. Luftporen beispielsweise auf Basis synthetischer Tenside oder modifizierter Harze, wie Wurzelharze, wie auch Mikrohohlkugeln als vorgefertigte Luftporen auf Basis von Acrylnitril-Polymeren, können gezielt in die Trockenmischung bzw. im Graphit- Zementslurry eingemischt werden, ebenso wie Schaumbildner, beispielsweise auf Basis organischer Tenside oder Alkylarylsulfonate.

Ein Leichtbauformteil kann unter Verwendung von Pigmenten, beispielsweise Farbpigmenten, hergestellt und/oder vollständig oder zumindest abschnittsweise lackiert sein.

Leichtbauformteile können auch zumindest abschnittsweise und/oder vollständig oberflächenbeschichtet sein und/oder Kaschierungen aufweisen, insbesondere in Form von Gewebe, metallischer Folie insbesondere Aluminiumfolie und/oder einer Polymerfolie wie beispielsweise Polyethylen, die bestimmte Funktionen erfüllen. Beispielsweise kann ein mit Wasser infiltriertes Formteil mit einer Aluminiumfolie vakuumverpackt ausgeführt sein. Ein derartiges Formteil weist eine sehr gute Eignung als Kühlelement auf.

Weitere geeignete Materialien zur Beschichtung der Formteile sind Vliese, technische Textilien, Papiere, Holzfurniere, Lochbleche aus Kunststoff oder Metall. Diese Schichtverbunde sind von Vorteil, weil dadurch die mechanische Stabilität des Formteils gestärkt werden kann.

Ebenso können wärmedämmende Beschichtungen aus Holz, Kork, Schilf und Kunststoffen, wie expandierter Polystyrol, Polyurethan oder Mineralwolle wie Glas- und Steinwolle, oder mineralische Schäumen wie Betonschaum oder Leichtbetonen, sowie wärmedämmende Mauersteine im Verbund verwendet werden, um mögliche Wärmeverluste zu vermeiden. Die Beschichtungen können beispielsweise auch zur Verbesserung der Optik, der Schalldämmung, Trittschalldämmung und/oder die Verminderung der Stoßempfindlichkeit des Leichtbauformteils beitragen.

Die Oberfläche des Leichtbauformteils kann auch mit Fasern aus Metall- bzw. Polymeren beflockt sein oder durch die Einbindung von Titandioxid für photokatalytische Anwendungen ausgerüstet werden.

In der nachfolgenden Tabelle 1 sind Beispiele für Trockenmischungen und deren physikalischen Eigenschaften angegeben.

Die in der Tabelle 1 angegebenen Dichtewerte betreffen eine angemachte Graphittrockenmischung in Form eines Slurrys. Die Dichte des Slurrys wurde ohne ein Verdichten der Masse, beispielsweise durch Rütteln, Stampfen oder Walzen ermittelt. Ein aus der Graphittrockenmischung hergestelltes Formteil durch Pressen oder Rütteln kann durch die Verdichtung des Slurrys eine entsprechend erhöhte Dichte aufweisen. Das bedeutet, dass während der Formteilherstellung weitere Einstellmöglichkeiten existieren, um die physikalischen Werkstoffeigenschaften des Formteils anzupassen. Insbesondere ist es möglich, ein Formteil mit lokal angepassten Werkstoffeigenschaften, insbesondere einer lokal unterschiedlichen Dichteverteilung herzustellen.

Aus Tabelle 1 wird unmittelbar klar, dass die Trockenmischung es ermöglicht, ein Formteil mit einem sehr variablen Dichtebereich herzustellen. Dazu ist ausschließlich die Mischung der Graphitpartikel mit Zement und Wasser erforderlich. Leichtbauzuschlagstoffe wie beispielsweise Blähton oder Bims, die bei der Herstellung von Leichtbeton verwendet werden, sind erfindungsgemäß entbehrlich.

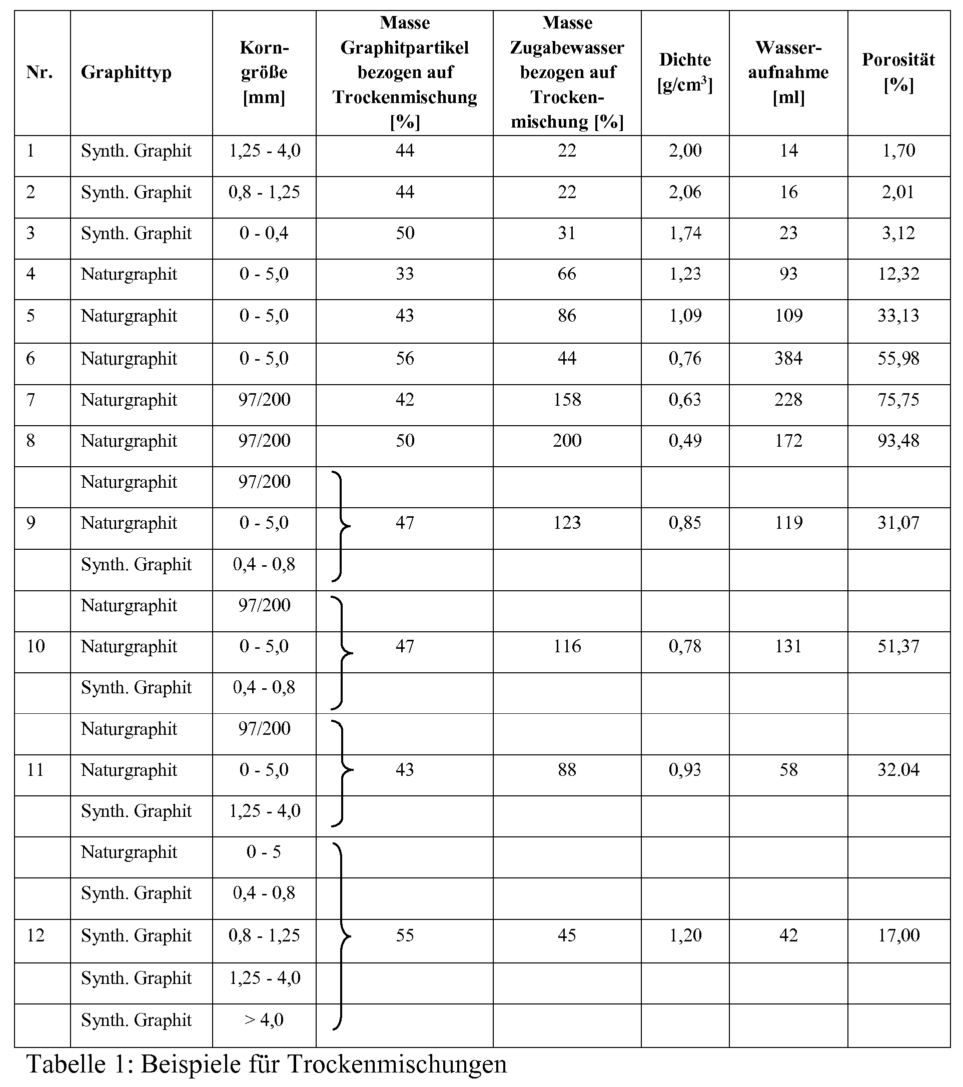

Wie die Tabellen 2 und 3 zeigen, ist es möglich Leichtbaumaterialien und entsprechende Leichtbauformteile herzustellen, die eine niedrige Dichte und zugleich eine erhöhte Wärmeleitfähigkeit aufweisen.

Bei Mauersteinen und Leichtbetonsteinen mit einer niedrigen Dichte ist die Wärmeleitfähigkeit wegen der erforderlichen Verwendung von Leichtbauzuschlagstoffen wie Blähton und Bims reduziert.

Die in den Tabelle 2 und 3 vorgestellten Leichtbauformteile verfügen zudem über eine hervorragende Abschirmwirkung gegenüber elektromagnetischen Strahlen und einen sehr niedrigen elektrischen Widerstand.

Erfindungsgemäß kann die erhöhte elektrische Leitfähigkeit der Leichtbauformteile durch die Verwendung des Graphits je nach Anforderung auch deutlich reduziert bzw. aufgehoben werden. Diese Eigenschaftsänderung der Leichtbauformteile wird dadurch erreicht, dass der Aufbau eines Perkolationsnetzwerkes aus Graphitpartikeln beispielsweise durch den Ansatz eines niedrigen Wasser-Zement-Wertes (kurz: w/z-Wertes) oder der Verwendung eines kleineren Masseanteils aus größeren Graphitpartikeln unterbunden wird.

Aus Tabelle 2 und 3 geht hervor, dass ein erfindungsgemäßes Leichtbauformteil im Vergleich zu den derzeitigen Standardbaustoffen und Standardbauteilen bei vergleichbarer Dichte eine größere Wärmeleitfähigkeit aufweist, wobei die Wärmeleitfähigkeit des erfindungsgemäßen Leichtbauformteils insbesondere mindestens doppelt so groß, insbesondere mindestens viermal so groß, insbesondere mindestens sechsmal so groß, insbesondere mindestens achtmal so groß und insbesondere mindestens zehnmal so groß ist wie die Wärmeleitfähigkeit der Standardbaustoffe. Hinzu kommt, dass die derzeit verwendeten Standardbauelemente keine Abschirmdämpfung bezüglich elektromagnetischer Strahlung und keine elektrische Leitfähigkeit aufweisen.

**Tabelle 2: Wärmeleitfähigkeit von Bauteilen mit besonders geringer Dichte**

| **Bauteil, Werkstoff** | **Dichte δ [g/cm³]** | **Wärmeleitfähigkeit λ [W/mK]** |
|---|---|---|
| erfindungs gemäßes Leichtbauformteil | 0,70 | 2,30 |
| Porenbeton, Planstein | 0,70 | 0,23 |
| Vollblock, Naturbims | 0,70 | 0,28 |
| Mauerstein, Blähton | 0,70 | 0,30 |
| Leichthochloch, Ziegel | 0,70 | 0,30 |
| Leichtbetonstein mit porösem Zuschlag | 0,80 | 0,38 |
| Ulme | 0,70 | 0,19 |
| Schiefer | 2,60 | 2,30 |

Das in Tabelle 2 aufgeführte Leichtbauformteil ist aus der Trockenmischung entsprechend der Nummer 7 aus Tabelle 1 hergestellt, die Naturgraphitmahlgut und Zement aufweist. Bei dem Zement handelt es sich um einen Portlandkompositezement, der gemäß DIN EN 197-1 die Kennzeichnung CEM II/A LL 32,5 R hat. Es handelt sich um einen Portlandkompositezement umfassend 80 % bis 94 % Portlandzementklinker und 6 % bis 20 % Kalkstein. Der Zement ist in der Festigkeitsklasse 32,5 angegeben, weist also nach 28 Tagen eine Festigkeit von 32,5 N/mm² auf. Der Zement hat eine hohe Anfangsfestigkeit, also eine schnelle Festigkeitsentwicklung, die mit dem Zusatz "R" gekennzeichnet wird.

Die Messung der Wärmeleitfähigkeit erfolgte gemäß EN ISO 2007-2:2015.

**Tabelle 3: Wärmeleitfähigkeit von Bauteilen mit geringer Dichte**

| **Bauteil, Werkstoff** | **Dichte δ [g/cm³]** | **Wärmeleitfähigkeit λ [W/m K]** |
|---|---|---|
| erfindungs gemäßes Leichtbauformteil | 1,20 | 4,50 |
| Leichtbeton mit porigen Zuschlägen | 1,20 | 0,46 |
| Hochloch, voll, Ziegel | 1,20 | 0,50 |
| Vollblock, Naturbims | 1,20 | 0,54 |
| Vollblock, Leichtbeton | 1,20 | 0,54 |
| Kalksandstein | 1,20 | 0,56 |
| Lehm | 1,20 | 0,50 |
| Basalt | 3,00 | 3,50 |
| Granit, Marmor | 2,80 | 3,50 |

Das in Tabelle 3 aufgeführte Leichtbauformteil ist aus der Trockenmischung entsprechend der Mischung 12 aus Tabelle 1 hergestellt, die Naturgraphitmahlgut und Zement mit der Kennzeichnung CEM II/A-LL 42,5 N aufweist. Im Unterschied zu dem Zement des Leichtbauformteils in Tabelle 2 weist dieser Zement eine höhere Festigkeitsklasse von 42,5 N/mm² nach 28 Tagen auf mit einer üblichen Anfangsfestigkeit, also normaler Festigkeitsentwicklung mit der Kennzeichnung "N".

## Patentansprüche

1. Leichtbauformteil mit einer Dichte zwischen 0,1 g/cm³ und 2,5 g/cm³ und mit einer gemäß EN ISO 2007-2: 2015 gemessenen Wärmeleitfähigkeit von mindestens 0,5 W/mK,
**dadurch gekennzeichnet, dass**
das Leichtbauformteil aus einer Trockenmischung umfassend Graphitpartikel und ein Bindemittel zum Abbinden der Trockenmischung mit Wasser, Lauge und/oder wässriger Salzlösung hergestellt ist, wobei der Masseanteil der Graphitpartikel in der Trockenmischung mehr als 0,05 beträgt, wobei das Bindemittel Magnesiabinder, Zement, kaustisch gebrannten Magnesit, Kalk und/oder Tonmehl aufweist.

2. Leichtbauformteil gemäß Anspruch 1, **dadurch gekennzeichnet, dass** die Graphitpartikel kornförmig und/oder faserförmig ausgeführt sind.

3. Leichtbauformteil gemäß einem der vorstehenden Ansprüche, **dadurch gekennzeichnet, dass** die Graphitpartikel eine Partikelgröße zwischen 0,1 µm bis 100 mm, insbesondere zwischen 1,0 µm und 40 mm, insbesondere zwischen 5 µm und 25 mm, insbesondere 10 µm bis 10 mm, und insbesondere zwischen 200 µm und 5 mm aufweisen.

4. Leichtbauformteil gemäß einem der vorstehenden Ansprüche, **dadurch gekennzeichnet, dass** die Graphitpartikel aus natürlichem und/oder aus synthetischem Graphit hergestellt sind, insbesondere aus expandierten Graphitflocken, gemahlenen Graphitflocken, gemahlenen Graphitfolien, gemahlenem Naturgraphit und/oder gemahlenem synthetischen Graphit.

5. Leichtbauformteil gemäß einem der vorstehenden Ansprüche, **dadurch gekennzeichnet, dass** die Graphitpartikel aus Koks, Ruße und Aktivkohle hergestellt sind.

6. Leichtbauformteil gemäß einem der vorstehenden Ansprüche, **gekennzeichnet durch** mindestens ein Thermo-Additiv zur Erhöhung der Wärmeleitfähigkeit und/oder zur Erhöhung der Wärmespeicherkapazität.

7. Leichtbauformteil gemäß einem der vorstehenden Ansprüche, **gekennzeichnet durch** mindestens ein Elektro-Additiv zur Erhöhung der elektrischen Leitfähigkeit, der elektrischen Speicherfähigkeit, der Reduzierung der magnetischen Permeabilität und/oder zur Verbesserung der Abschirmung elektromagnetischer Strahlung.

8. Leichtbauformteil gemäß einem der vorstehenden Ansprüche, **gekennzeichnet durch** mindestens ein Struktur-Additiv zur Veränderung der Struktur eines aus der Trockenmischung hergestellten Formteils.

9. Leichtbauformteil gemäß einem der Ansprüche 1 bis 4, **dadurch gekennzeichnet, dass** die Trockenmischung ausschließlich aus Graphitpartikeln und Zement besteht.

10. Leichtbauformteil gemäß einem der vorstehenden Ansprüche, **gekennzeichnet durch** eine Abschirmwirkung gegenüber elektromagnetischer Strahlung von mindestens 80 %, insbesondere mindestens 90 %, insbesondere mindestens 99 %, insbesondere von mindestens 99,99 % und insbesondere von mindestens 99,9999 %.

11. Sandwichbauteil umfassend ein mindestens einen Hohlraum aufweisendes Bauelement, wobei in dem mindestens einen Hohlraum eine Trockenmischung eingefüllt und unter Bildung eines Leichtbauformteils gemäß einem der vorstehenden Patentansprüche abgebunden ist.

12. Sandwichbauteil, das als dreilagiges Verbundelement ausgeführt ist mit einem mittig angeordneten Element in Form eines Leichtbauformteils gemäß einem der Ansprüche 1 bis 10.

13. Verfahren zur Herstellung eines Leichtbauformteils gemäß einem der Ansprüche 1 bis 10 durch 3D-Druck.

## Claims

1. Lightweight molding with a density between 0.1 g/cm³ and 2.5 g/cm³ and with a thermal conductivity measured according to EN ISO 2007-2: 2015 of at least 0.5 W/mK,
**characterized in that**
the lightweight molding is made from a dry mixture comprising graphite particles and a binder for setting the dry mixture by means of water, alkali and/or aqueous salt solution, wherein the proportion by mass of the graphite particles in the dry mixture is more than 0.05, wherein the binder comprises magnesia binder, cement, caustic-calcined magnesite, lime and/or clay powder.

2. Lightweight molding according to claim 1, **characterized in that** the graphite particles are grain-shaped and/or fiber-shaped.

3. Lightweight molding according to any one of the preceding claims, **characterized in that** the graphite particles have a particle size in the range from 0.1 µm to 100 mm, in particular from 1.0 µm to 40 mm, in particular from 5 µm to 25 mm, in particular from 10 µm to 10 mm and in particular from 200 µm to 5 mm.

4. Lightweight molding according to any one of the preceding claims, **characterized in that** the graphite particles have been produced from natural and/or synthetic graphite, in particular from expanded graphite flocs, milled graphite flocs, milled graphite foils, milled natural graphite and/or milled synthetic graphite.

5. Lightweight molding according to any one of the preceding claims, **characterized in that** the graphite particles have been produced from coke, carbon blacks and activated carbon.

6. Lightweight molding according to any one of the preceding claims, **characterized by** at least one thermal additive for increasing the thermal conductivity and/or for increasing the heat storage capacity.

7. Lightweight molding according to any one of the preceding claims, **characterized by** at least one electrical additive for increasing the electrical conductivity, the electrical storage capacity, reducing the magnetic permeability and/or for improving the shielding against electromagnetic radiation.

8. Lightweight molding according to any one of the preceding claims, **characterized by** at least one structural additive for altering the structure of a molding produced from the dry mixture.

9. Lightweight molding according to any one of claims 1 to 4, **characterized in that** the dry mixture consists exclusively of graphite particles and cement.

10. Lightweight molding according to any one of the preceding claims, **characterized by** a shielding against electromagnetic radiation of at least 80%, in particular at least 90%, in particular at least 99%, in particular at least 99.99% and in particular at least 99.9999%.

11. Sandwich component comprising a construction element having at least one hollow space, wherein a dry mixture has been introduced into the at least one hollow space and set to form a lightweight molding as claimed in any one of the preceding claims.

12. Sandwich component configured as three-layer composite element with a centrally arranged element in the form of a lightweight molding according to any one of claims 1 to 10.

13. Method for producing a lightweight molding according to any one of claims 1 to 10 using 3D printing.

## Revendications

1. Pièce moulée légère ayant une densité comprise entre 0,1 g/cm³ et 2,5 g/cm³ et ayant une conductivité thermique, mesurée conformément à la norme EN ISO 2007-2 : 2015, d'au moins 0,5 W/mK,
**caractérisée en ce que**
la pièce moulée légère est produite à partir d'un mélange sec comprenant des particules de graphite et un liant pour la prise du mélange sec avec de l'eau, de la lessive et/ou une solution saline aqueuse, la proportion en masse des particules de graphite dans le mélange sec étant supérieure à 0,05, le liant comprenant un liant à base de magnésie, du ciment, de la magnésite calcinée, de la chaux et/ou de la poudre d'argile.

2. Pièce moulée légère selon la revendication 1, **caractérisée en ce que** les particules de graphite se présentent sous la forme de grains et/ou de fibres.

3. Pièce moulée légère selon l'une quelconque des revendications précédentes, **caractérisée en ce que** les particules de graphite ont une taille de particule comprise entre 0,1 µm et 100 mm, en particulier entre 1,0 µm et 40 mm, en particulier entre 5 µm et 25 mm, en particulier entre 10 µm et 10 mm, et en particulier entre 200 µm et 5 mm.

4. Pièce moulée légère selon l'une quelconque des revendications précédentes, **caractérisée en ce que** les particules de graphite sont fabriquées à partir de graphite naturel et/ou synthétique, en particulier à partir de paillettes de graphite expansée, de paillettes de graphite moulues, de feuilles de graphite moulues, de graphite naturel moulu et/ou de graphite synthétique moulu.

5. Pièce moulée légère selon l'une quelconque des revendications précédentes, **caractérisée en ce que** les particules de graphite sont fabriquées à partir de coke, de noir de carbone et de charbon actif.

6. Pièce moulée légère selon l'une quelconque des revendications précédentes, **caractérisée par** au moins un additif thermique pour augmenter la conductivité thermique et/ou pour augmenter la capacité de stockage de chaleur.

7. Pièce moulée légère selon l'une quelconque des revendications précédentes, **caractérisée par** au moins un électro-additif pour augmenter la conductivité électrique, la capacité de stockage électrique, la réduction de la perméabilité magnétique et/ou pour améliorer le blindage contre le rayonnement électromagnétique.

8. Pièce moulée légère selon l'une quelconque des revendications précédentes, **caractérisée par** au moins un additif structurel pour modifier la structure d'une pièce moulée produite à partir du mélange sec.

9. Pièce moulée légère selon l'une quelconque des revendications 1 à 4, **caractérisée en ce que** le mélange sec se compose exclusivement de particules de graphite et de ciment.

10. Pièce moulée légère selon l'une quelconque des revendications précédentes, **caractérisée par** un effet de blindage contre les rayonnements électromagnétiques d'au moins 80 %, en particulier d'au moins 90 %, en particulier d'au moins 99 %, en particulier d'au moins 99,99 % et en particulier d'au moins 99,9999 %.

11. Composant sandwich comprenant un élément structurel ayant au moins une cavité, un mélange sec étant rempli dans l'au moins une cavité et est pris en formant une pièce moulée légère selon l'une quelconque des revendications précédentes.

12. Composant sandwich étant conçu comme un élément composite à trois couches avec un élément central sous la forme d'une pièce moulée légère selon l'une quelconque des revendications 1 à 10.

13. Procédé de fabrication d'une pièce moulée légère selon l'une quelconque des revendications 1 à 10 par impression 3D.
